# FASCICULE DE BREVET EUROPEEN

(11) **EP 2 600 107 B1**
(45) Date de publication et mention de la délivrance du brevet: **03.07.2019**
(21) Numéro de dépôt: 12194259.3
(22) Date de dépôt: 26.11.2012
(51) Int. Cl.: G01C 23/00, G06F 3/048, G06F 3/0488, G06F 3/0484, G06F 3/0362, G05D 1/00

(54) **Dispositif de dialogue interactif entre un opérateur d'un aéronef et un système de guidage dudit aéronef**
Vorrichtung für den interaktiven Dialog zwischen einem Luftfahrzeugführer und einem Lenksystem dieses Luftfahrzeugs
Device for interactive dialogue between an aircraft operator and a system for guiding said aircraft

(30) Priorité: 29.11.2011 FR 1160885
(43) Date de publication de la demande: 05.06.2013
(73) Titulaire: Airbus Opérations SAS, 31060 Toulouse (FR)
(72) Inventeur: Louise-Babando, Pascale, 31100 Toulouse (FR); MacDonald, Delphine, 31000 Toulouse (FR); Ankaoua, Raphaëlle, 94300 Vincennes (FR)
(74) Mandataire: Gevers & Orès

(56) Documents cités:
- EP-A1- 2 482 175
- US-A- 5 592 198
- US-A- 6 072 473
- US-A- 6 112 141
- US-A1- 2005 143 871
- US-A1- 2007 182 590
- US-A1- 2009 138 143
- US-A1- 2010 125 788

## Description

La présente invention concerne un dispositif de dialogue pour un aéronef, notamment un avion de transport, permettant un dialogue entre un opérateur de l'aéronef, en particulier un pilote, et un système de guidage dudit aéronef.

Ledit dispositif de dialogue est du type comprenant au moins une unité de commande qui comporte des moyens de sélection manuelle de modes de guidage et de consignes de guidage dudit système de guidage.

On sait que les avions dotés d'un système de guidage, à savoir soit d'un directeur de vol qui calcule des consignes de pilotage en fonction de consignes de guidage soit d'un système de pilotage automatique qui permet de suivre des consignes de guidage de façon automatique, sont pourvus d'un équipement (ou unité de commande), appelé FCU (« Flight Control Unit » en anglais) sur les avions de type AIRBUS et MCP (« Mode Control Panel » en anglais) sur les avions de type BOEING, qui permet à un pilote de l'avion d'entrer des consignes de guidage dans le système de guidage.

Les documents US6112141 et US2005/0143871 décrivent des dispositifs de dialogues entre un opérateur d'un aéronef et un système de guidage.

De façon générale, le pilote choisit une consigne de guidage, puis il commande l'engagement (activation) du mode de guidage associé, pour qu'il prenne en compte soit la valeur entrée (dans un mode dit « sélecté »), soit une valeur calculée par le système selon divers critères (dans un mode dit « managé »).

Plus particulièrement, le pilote peut notamment :
- sur l'axe de vitesse :
   - entrer une consigne de vitesse (CAS) ou de Mach ;
   - donner la main au système de façon à utiliser une consigne de vitesse ou de Mach calculée en fonction de certains critères ;
- sur l'axe latéral :
   - entrer une consigne de cap (HEADING) ou de route (TRACK) ;
   - donner la main au système de façon à utiliser la route du plan de vol prédéfini ; et
- sur l'axe vertical :
   - entrer une consigne d'altitude ;
   - indiquer la manière de rejoindre cette consigne d'altitude :
      - en respectant une vitesse verticale ou une pente ; ou
      - en optimisant le temps de montée ou de descente tout en respectant une vitesse air ; ou bien
      - en respectant un profil vertical géométrique défini par le système selon certains critères ;
   - prévoir un palier ; et
   - suivre un axe (d'approche par exemple).

Ces consignes sont prises en compte par le système de guidage, soit directement dès que leur valeur est modifiée si le mode associé est actif, soit après validation (engagement du mode associé) dans le cas où un autre mode de guidage est initialement engagé. Dans ce dernier cas, la consigne est dite préréglée (« preset » en anglais) avant sa validation.

A chaque sélection de consigne à atteindre ou à maintenir correspond un mode de guidage de l'avion. Il existe un mode engagé par axe (vitesse, latéral, vertical) de façon exclusive. A titre d'illustration, on peut citer les modes suivants :
- sur l'axe latéral :
   - mode de capture ou de maintien d'un cap ;
   - mode de capture ou de maintien d'une route ;
   - mode de rejointe ou de maintien de la trajectoire du plan de vol ;
   - mode de capture ou de maintien d'un axe d'approche sur un plan horizontal ; et
- sur l'axe vertical :
   - mode de capture ou de maintien d'altitude ;
   - mode de rejointe d'altitude (montée ou descente) en respectant une vitesse air ;
   - mode de montée ou de descente en respectant une vitesse verticale ou une pente ;
   - mode de montée ou de descente en respectant un profil géométrique ou des contraintes d'altitude ; et
   - mode de capture ou de maintien de l'axe d'approche sur un plan vertical.

Un résumé synthétique du comportement du système de guidage (directeur de vol ou système de pilotage automatique, associé ou non à une commande automatique de la poussée) est réalisé, en général, sur les écrans affichant les paramètres primaires du vol, de type PFD (pour « Primary Flight Display » en anglais), au niveau d'un tableau de type FMA (pour « Flight Mode Annunciator » en anglais). Ce résumé synthétique rappelle, généralement, les modes de guidage engagés (actifs) sur chaque axe (vitesse, latéral, vertical), ainsi que les modes de guidage armés, c'est-à-dire ceux qui ont été demandés par le pilote et qui s'engageront de façon automatique lorsque des conditions d'engagement du mode seront remplies. A titre d'exemple, en dehors de la trajectoire du plan de vol, en mode de maintien de cap convergeant vers la trajectoire du plan de vol avec le mode rejointe et de maintien de la trajectoire du plan de vol armé, ce dernier mode s'engage de façon automatique à l'approche du plan de vol.

Sur la plupart des avions à deux pilotes, le boîtier de commande du système de guidage est situé au centre du poste de pilotage (au-dessus des écrans présentant les paramètres de vol) afin que les deux pilotes puissent y accéder.

Ce boîtier de commande, par exemple de type FCU, permet :
- de sélectionner des consignes de guidage ;
- d'engager les modes associés à une consigne de guidage (rendre le mode actif) ou de demander l'armement du mode ; et
- de changer de référence (par exemple cap plutôt que route) pour une consigne de guidage.

Le pilote en charge du guidage de l'avion a pour tâche de sélectionner les consignes et les modes de guidage. Actuellement, il réalise cette tâche par le biais de l'unité de commande dédié (FCU ou MCP) qui se trouve sur l'auvent entre les deux pilotes, puis il doit vérifier la sélection de ses consignes (valeurs) au niveau de l'écran primaire de vol qui se trouve face à lui (PFD pour « Primary Flight Display ») et/ou des écrans de navigation (ND pour « Navigation Display » dans le plan latéral ; VD pour « Vertical Display » dans le plan vertical), ainsi que l'état du système de guidage au travers d'un tableau de type FMA qui indique les modes de guidage armés ou engagés sur chaque axe (vitesse/mach, cap/route, altitude, vitesse verticale/pente).

Cette solution usuelle présente des inconvénients, et notamment :
- le pilote doit sélectionner les consignes et modes de guidage à un endroit (boîtier de commande FCU), puis vérifier la prise en compte effective de ses actions sur le comportement de l'avion, à savoir l'état des modes de guidage (armés ou engagés), à un autre endroit sur les écrans de restitution, car le boîtier de commande lui-même ne permet pas d'accéder à l'état du système de guidage de façon exhaustive. Ceci impose donc des allers-retours visuels ;
- le boîtier de commande ne permet pas d'avoir une vision d'ensemble de la totalité des modes de guidage possibles ; et
- ce boîtier de commande est un équipement physique difficilement modifiable (car de type matériel).

La présente invention a pour objet de remédier aux inconvénients précités. Elle concerne un dispositif de dialogue entre un opérateur d'un aéronef et un système de guidage susceptible de gérer des modes de guidage de l'aéronef, selon les trois axes de commande dudit aéronef : l'axe de vitesse, l'axe latéral et l'axe vertical, ledit système de guidage utilisant des consignes de guidage pour la gestion desdits modes de guidage, ledit dispositif de dialogue comprenant au moins une unité de commande qui comporte des moyens de sélection manuelle de modes de guidage et de consignes de guidage.
A cet effet, selon l'invention, ledit dispositif de dialogue qui est embarqué sur l'aéronef, est remarquable en ce que ladite unité de commande comprend, de plus, un écran de visualisation, sur lequel sont affichées trois représentations graphiques qui sont associées respectivement auxdits trois axes de commande de l'aéronef, en ce que chacune desdites représentations graphiques est réalisée sous forme d'un ensemble graphique, chacun desdits ensembles graphiques comportant une pluralité de portions, dont chacune est associée à un mode de guidage de l'axe de commande associé, de sorte que tous les modes de guidage possibles du système de guidage sont ainsi représentés, et en ce que la portion relative à un mode de guidage effectivement engagé sur le système de guidage est mise en évidence sur la représentation graphique correspondante, cette représentation mettant en évidence le fait que les modes de guidage sont actifs de façon exclusive sur un axe de guidage donné (un seul mode de guidage peut être engagé à la fois sur un axe donné)

Ainsi, grâce à l'invention, on dispose sur l'écran de visualisation de ladite unité de commande d'une représentation de l'ensemble des modes de guidage qui peuvent être engagés. Ceci permet à un pilote de l'aéronef d'avoir une vision d'ensemble très pertinente de l'état du système de guidage, permettant une bonne compréhension du comportement dudit système.

De plus, grâce à l'invention, les entrées du pilote vers le système de guidage (saisie des consignes de guidage, requête d'armement/engagement des modes de guidage, changement de référence de guidage, comme précisé ci-dessous) se font au même endroit (au niveau de ladite unité de commande) que la restitution synthétique de l'état du guidage (modes armés ou engagés et consignes de guidage, comme précisé ci-dessous), ce qui permet d'éviter les allers-retours visuels usuels entre une unité de commande dédiée (par exemple un panneau de commande FCU ou MCP) et un écran séparé (par exemple un écran PFD contenant un tableau FMA).

En outre, le mode de représentation graphique de cette restitution synthétique permet une lecture en un coup d'oeil des modes engagés, grâce à leur représentation graphique spécifique prédominante des modes engagés (par exemple, dans un mode de réalisation préféré, la coloration complète des portions de l'ensemble graphique). Ceci permet une compréhension rapide de l'état du système de guidage (par opposition à une restitution textuelle nécessitant une lecture et une interprétation nécessitant de la ressource cognitive).

Par ailleurs, dans un mode de réalisation préféré, chacun desdits ensembles graphiques permettant une représentation visuelle complète, simplifiée et structurée est réalisé sous forme d'un diagramme semi-circulaire, à portions définies par des arcs de cercle adjacents, c'est-à-dire un diagramme dit « en demi-camembert ».

En outre, de façon avantageuse, on réalise, de plus, sur chacune desdites représentations graphiques, au moins l'une des mises en évidence graphiques suivantes, sous forme d'un graphisme ou d'une animation graphique :
- une mise en évidence graphique particulière, par exemple au moyen d'un contour plus épais, de modes de guidage armés ; et
- une mise en évidence graphique particulière de modes de capture.

Par ailleurs, avantageusement, on affiche, sur au moins l'une desdites représentations graphiques, la valeur d'une consigne de guidage dans la portion associée au mode de guidage correspondant. Dans ce cas, de préférence, l'affichage de ladite valeur est différencié, par exemple par un jeu de couleurs, selon que cette valeur de consigne de guidage est atteinte ou en cours d'acquisition.

Selon l'invention, lors de la modification de la valeur d'une consigne de guidage à l'aide desdits moyens de sélection, une échelle relative à cette consigne de guidage est affichée, de façon temporaire, sur la représentation graphique correspondante.

Cet affichage (temporaire pendant la durée de la modification) a pour but de :
- visualiser de façon graphique la sélection de la nouvelle valeur de consigne ; et
- souligner de façon graphique l'état de la consigne en cours de modification, par le fait que les échelles sont, de préférence, différentes et adaptées à chaque valeur de consigne.

Par ailleurs, dans le cas où le système de guidage comprend au moins un mode de guidage (par exemple un mode de décollage ou de remise des gaz) qui devient prioritaire lorsque des conditions particulières sont remplies, de façon avantageuse, la portion relative audit mode de guidage prioritaire est mise en évidence automatiquement sur la représentation graphique correspondante lorsque lesdites conditions particulières sont remplies.

Par ailleurs, dans un mode de réalisation particulier, ledit dispositif de dialogue comprend, sur ledit écran de visualisation :
- une interaction graphique entre des portions de deux représentations graphiques différentes, lorsque les modes de guidage correspondant auxdites portions sont liés ensemble ; et/ou
- au moins un moyen d'interaction permettant de réaliser un changement de référence de guidage (vitesse/mach, cap/route, vitesse verticale/pente) pour une même consigne de guidage, un changement de référence de guidage, lorsqu'il est réalisé, étant mis en évidence sur la portion correspondante.

L'invention repose donc sur une représentation de l'ensemble des modes de guidage possibles, en mettant en évidence le fait que les modes de guidage sont actifs de façon exclusive sur un axe donné (un seul mode de guidage peut être engagé à la fois sur un axe donné) avec une mise en évidence graphique des modes de guidage actifs. Elle permet au pilote de choisir une consigne de guidage, de demander l'engagement (activation) du mode de guidage associé sur la valeur définie (mode dit sélecté), ou sur une valeur calculée par le système selon certains critères (mode dit managé), tout en donnant une restitution synthétique du comportement du système de guidage sous forme graphique. Certains modes passent par un état armé lors de la demande d'engagement jusqu'à ce que les conditions d'engagement soient remplies.

Dans le cadre de la présente invention, lesdits moyens de sélection peuvent être réalisés de différentes manières.

Dans un premier mode de réalisation, lesdits moyens de sélection comprennent au moins un moyen d'actionnement manuel (ou sélecteur) qui est agencé sur l'unité de commande à proximité de la représentation graphique correspondante. Ce moyen d'actionnement manuel peut avoir différentes formes possibles : rotacteur, molette,...

Dans un second mode de réalisation (en variante ou en complément dudit premier mode de réalisation), ledit dispositif de dialogue comporte des moyens pour réaliser une action directe sur un objet graphique représentant une portion d'un ensemble graphique, en vue au moins d'une sélection de mode de guidage. Dans ce cas, avantageusement, on présente sur l'écran de visualisation, au moins sur la portion correspondante, une animation graphique lors de l'interaction directe.

Dans ce second mode de réalisation :
- dans une première variante, ledit écran est un écran tactile, et une sélection au moins de modes de guidage est susceptible d'être réalisée par un contact direct dudit écran tactile ; et
- dans une seconde variante, lesdits moyens de sélection comprennent des moyens de commande reliés à l'écran et permettant à un opérateur de commander le déplacement d'un curseur sur l'écran, destiné à la sélection au moins de modes de guidage.

Le dispositif de dialogue conforme à l'invention, de type interactif, permet ainsi de fournir une restitution synthétique de l'état du guidage (modes armés ou engagés et consignes de guidage), à l'endroit même (unité de commande) où le pilote peut sélectionner les consignes de guidage ainsi que les modes de guidage, ce qui permet notamment d'éviter des allers-retours visuels usuels.

Dans le cadre de la présente invention, ledit dispositif de dialogue peut notamment comporter une pluralité d'unités de commande telles que précitées conformes à l'invention, ou au moins une telle unité de commande ainsi qu'un boîtier de commande usuel, par exemple de type FCU.

La présente invention concerne également un système de guidage d'un aéronef, à savoir un directeur de vol ou un système de pilotage automatique, qui comporte un dispositif de dialogue tel que celui précité, pour permettre un dialogue entre ledit système de guidage et un opérateur, notamment un pilote, dudit aéronef.

La présente invention concerne en outre un aéronef, en particulier un avion de transport, qui est équipé :
- d'un tel dispositif de dialogue ; et/ou
- d'un tel système de guidage.

Les figures du dessin annexé feront bien comprendre comment l'invention peut être réalisée. Sur ces figures, des références identiques désignent des éléments semblables.
La figure 1 est le schéma synoptique d'un dispositif de dialogue conforme à l'invention.
Les figures 2 à 15 illustrent schématiquement différentes actions susceptibles d'être réalisées conformément à l'invention, en agissant sur l'unité de commande selon l'invention.

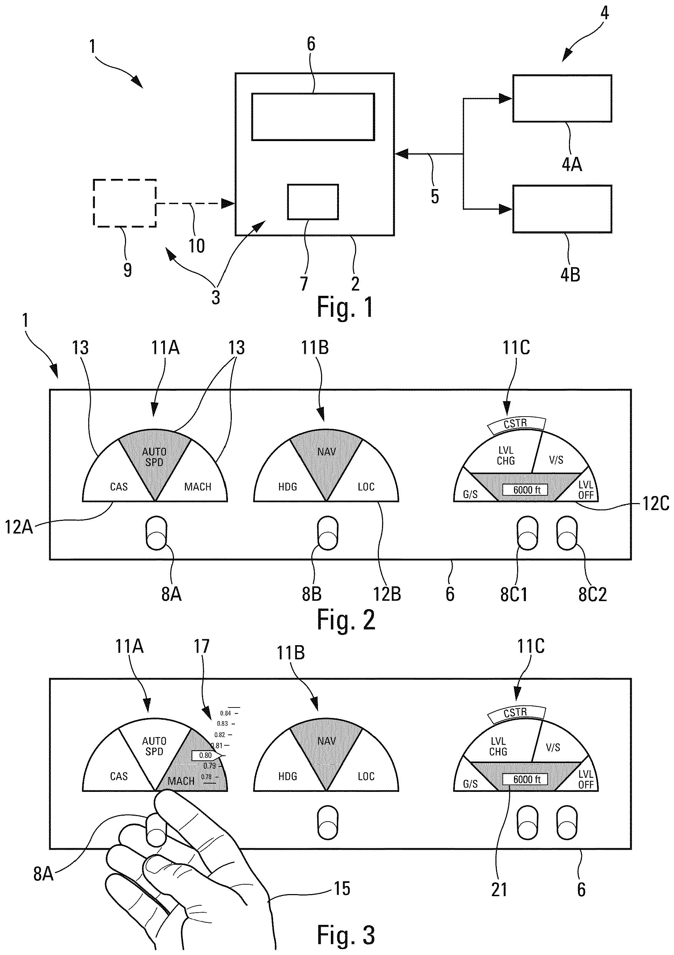

Le dispositif de dialogue 1 conforme à l'invention et représenté schématiquement sur la figure 1 est embarqué sur un aéronef, en particulier un avion de transport, non représenté, et est, de préférence, agencé dans le poste de pilotage dudit aéronef. Ce dispositif de dialogue 1 est destiné à permettre un dialogue entre au moins un opérateur de l'aéronef, notamment un pilote, et un système de guidage 4 usuel dudit aéronef.

Ce système de guidage 4 est susceptible de gérer des modes de guidage de l'aéronef selon ses trois axes de commande : l'axe de vitesse, l'axe latéral et l'axe vertical, et il utilise des consignes de guidage pour la gestion desdits modes de guidage.

Ledit dispositif de dialogue 1 qui est embarqué sur l'aéronef comporte au moins une unité de commande 2 qui comprend des moyens 3 de sélection manuelle de modes de guidage et de consignes de guidage.

Ladite unité de commande 2 est reliée par l'intermédiaire d'une liaison 5 à des moyens de guidage 4A et 4B dudit système de guidage 4, de manière à pouvoir réaliser une communication d'informations entre les deux ensembles. Ledit système de guidage 4 peut comporter, comme moyens de guidage :
- un directeur de vol 4A usuel, qui calcule des consignes de pilotage en fonction de consignes de guidage ; et/ou
- un système de pilotage automatique 4B usuel, qui permet de suivre des consignes de guidage de façon automatique.

Selon l'invention, ladite unité de commande 2 comprend, de plus, un écran de visualisation 6, sur lequel sont affichées trois représentations graphiques 11A, 11B et 11C, qui sont associées respectivement auxdits trois axes de commande de l'aéronef, comme représenté par exemple sur la figure 2. Chacune desdites représentations graphiques 11A, 11B et 11C, est réalisée sous forme d'un ensemble graphique 12A, 12B, 12C, chacun desdits ensembles graphiques 12A à 12C comportant une pluralité de portions (ou formes graphiques) 13, dont chacune est associée à un mode de guidage de l'axe de commande associé, de sorte que tous les modes de guidage possibles du système de guidage 4 sont ainsi représentés sur l'écran 6. De plus, la portion 13 relative à un mode de guidage effectivement engagé sur le système de guidage 4 est mise en évidence sur la représentation graphique 11A, 11B, 11C correspondante, comme illustré par une portion grisée sur la figure 2 par exemple.

Ainsi, grâce au dispositif de dialogue 1 conforme à l'invention, un opérateur dispose sur l'écran de visualisation 6 de ladite unité de commande 2 d'une représentation de l'ensemble des modes de guidage qui peuvent être engagés. Ceci permet à un pilote de l'aéronef d'avoir une vision d'ensemble complète de l'état du système de guidage 4, permettant une bonne compréhension du comportement dudit système 4.

De plus, grâce à l'invention, les entrées du pilote vers le système de guidage 4 (saisie des consignes de guidage, requête d'armement/engagement des modes de guidage, changement de référence de guidage, comme précisé ci-dessous) se font au même endroit (au niveau de ladite unité de commande 2) que la restitution synthétique de l'état du guidage (modes armés ou engagés et consignes de guidage, comme précisé ci-dessous), ce qui permet d'éviter les allers-retours visuels usuels entre une unité de commande dédiée (par exemple un panneau de commande FCU ou MCP) et un écran séparé (par exemple un écran PFD contenant un tableau FMA).

En outre, le mode de présentation graphique de cette restitution synthétique permet une lecture en un coup d'oeil des modes engagés, grâce à leur représentation graphique spécifique prédominante des modes engagés (par exemple, dans un mode de réalisation préféré, la coloration complète des portions de l'ensemble graphique). Ceci permet une compréhension rapide de l'état du système de guidage 4 (par opposition à une restitution textuelle nécessitant une lecture et une interprétation nécessitant de la ressource cognitive).

Le dispositif 1 est donc bien un dispositif de dialogue avec une transmission d'informations dans les deux sens, à savoir la sélection de modes et de consignes de l'unité de commande 2 vers le système de guidage 4 et l'indication de l'état du système 4 à ladite unité de commande 2 pour sa restitution sur l'écran 6.

Par ailleurs, chacun desdits ensembles graphiques 12A, 12B, et 12C permet de regrouper, visuellement et formellement, les modes associés à l'axe correspondant (vitesse, latéral, vertical), et permet ainsi une représentation visuelle complète, simplifiée et structurée. Dans un mode de réalisation préféré (représenté sur les figures 2 à 15), chacun desdits ensembles graphiques 12A à 12C est réalisé sous forme d'un diagramme semi-circulaire, à portions 13 définies par des arcs de cercle adjacents, c'est-à-dire un diagramme dit « en demi-camembert », dans lequel chaque portion 13 représente un mode de guidage engageable.

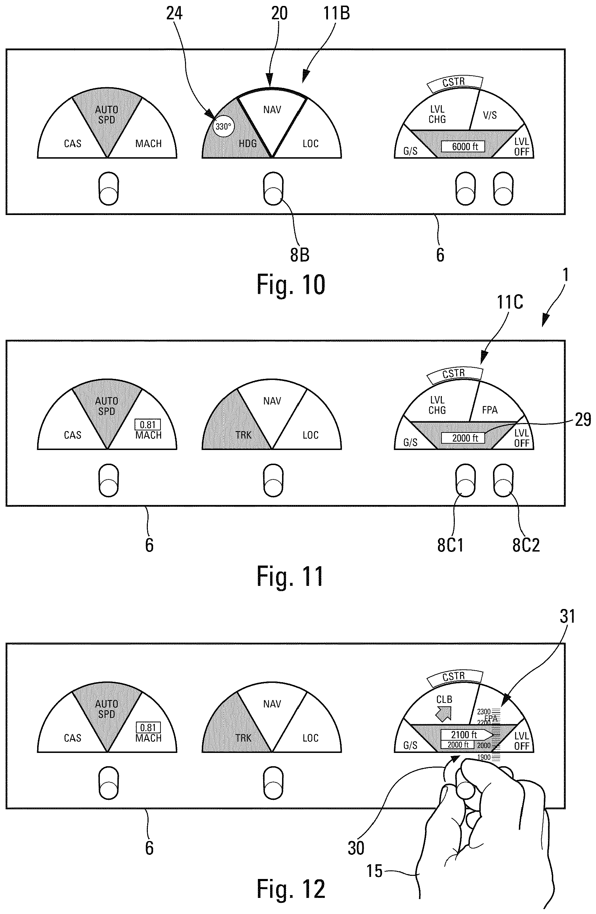

Chaque représentation (portion 13) d'un mode de guidage possible, peut abriter :
- un label textuel unique (par exemple CAS) ; ou
- un label textuel contextuel selon l'état relatif de l'aéronef par rapport aux consignes de guidage, par exemple une portion 13 représentant les modes de changement de niveaux d'altitude de l'ensemble graphique 12C se voit attribué un label DES (pour descente) ou CLB (pour montée) à la figure 12 par exemple ou LVL CHG (pour changement de niveau) à la figure 2 par exemple, en fonction de la valeur de consigne d'altitude choisie, ou de référence (par exemple on peut avoir dans la même portion 13 le label HDG (figure 2) pour le cap si la référence de guidage est un cap ou le label TRK (figure 12) pour la route si la référence de guidage est une route pour l'axe latéral).

Cette interface contextuelle peut s'adapter à la phase de vol suggérant des activations de mode. Par exemple, l'interface peut permettre l'activation du mode d'approche une fois l'approche spécifiée dans le système (sélection de piste et type de procédure volée), ou suggérer l'utilisation du/ou des mode(s) de montée possibles lorsque la consigne d'altitude est supérieure à l'altitude courante de l'aéronef.

Grâce à l'unité de commande 2, le pilote peut notamment :
- sur l'axe de vitesse :
   - entrer une consigne de vitesse (CAS) ou de Mach ; ou
   - donner la main au système de façon à utiliser une consigne de vitesse ou de Mach calculée en fonction de certains critères (mode dit « automatique » ou « managé »).
   En conséquence, dans le mode de réalisation préféré représenté sur les figures 2 à 15, l'ensemble graphique 12A relatif à l'axe de vitesse comporte trois portions 13 (ou formes graphiques) correspondant aux trois modes de guidage possibles (et engageables de façon exclusive) suivants : CAS, MACH et AUTO SPD (à savoir « auto-speed » pour le mode dit « automatique » ou managé) ;
- sur l'axe latéral :
   - entrer une consigne de cap (heading) ou de route (track) ; ou
   - donner la main au système de façon à utiliser la route du plan de vol prédéfini ou un axe d'approche défini.
   En conséquence, dans le mode de réalisation préféré représenté sur les figures 2 à 15, l'ensemble graphique 12B relatif à l'axe latéral comporte trois portions 13 (ou formes graphiques) correspondant aux trois modes de guidage possibles (et engageables de façon exclusive) suivants : HDG pour la capture ou le maintien de cap (ou TRK pour la capture ou le maintien de route), NAV pour le suivi du plan de vol (mode dit « automatique » ou managé), et LOC pour le mode de capture ou de maintien de l'axe « Localizer » d'approche (ce label pouvant être adapté de façon contextuelle si le besoin de différencier le type d'approche existe, par exemple F-LOC pour une approche de type FLS,...) ; et
- sur l'axe vertical :
   - entrer une consigne d'altitude ;
   - indiquer la manière de rejoindre cette consigne d'altitude :
   - en respectant une vitesse verticale ou une pente ; ou
   - en optimisant le temps de montée ou de descente tout en respectant une vitesse air ; ou bien
   - en respectant un profil vertical géométrique défini par le système selon certains critères ou certaines contraintes sur des points géographiques (exemple : contrainte d'altitude ou de vitesse) ;
   - prévoir un palier ; et
   - suivre un axe (d'approche par exemple).

En conséquence, dans le mode de réalisation préféré représenté sur les figures 2 à 15, l'ensemble graphique 12C relatif à l'axe vertical comporte cinq portions (ou formes graphiques) correspondant aux cinq modes (ou types de mode) de guidage possibles (et engageables de façon exclusive) suivants :
- une forme graphique (ou portion) 13 dédiée au mode G/S pour la capture ou le maintien de l'axe « Glide » (ce label pouvant être adapté de façon contextuelle si le besoin de différencier le type d'approche existe, par exemple F-G/S pour une approche de type FLS,...) ;
- une forme graphique dédiée aux modes de changement de niveaux : le label textuel LVL CHG est affiché par défaut lorsque la valeur de l'altitude de consigne est égale à la valeur d'altitude courante. Lorsque ces deux valeurs sont différentes, on affiche les labels CLB ou DES en fonction de la position relative des deux valeurs d'altitude (CLB pour la montée vers l'altitude de consigne, DES pour la descente), ou tout autre label textuel spécifique qui serait jugé utile (par exemple CSTR ou PROFILE pour un mode de montée ou descente sous contrainte, ou prenant en compte un profil géométrique), ou encore TO pour décollage ou GA pour la remise des gaz ;
- une forme graphique dédiée à la caractérisation du type de montée ou descente en V/S pour la vitesse verticale (ou FPA pour la pente) ;
- une forme graphique dédiée au palier immédiat LVL OFF ; et
- une forme graphique dédiée à la capture ou au maintien d'une altitude ALT, associé à une valeur d'altitude (valeur sélectée par le pilote), par exemple « 6000 ft », à savoir 6000 pieds, sur la figure 2.

L'unité de commande 2 permet notamment de mettre en oeuvre toutes les fonctions d'un boîtier de commande physique usuel, par exemple de type FCU. Dans le cadre de la présente invention, les moyens de sélection 3 de ladite unité de commande 2 peuvent être réalisés de différentes manières.

Dans un premier mode de réalisation du dispositif de dialogue 1, comme représenté sur les figures 1 à 15, lesdits moyens de sélection 3 comprennent un ensemble 7 de moyens d'actionnement manuel 8A, 8B, 8C1, 8C2 (en l'occurrence des boutons) qui sont agencés sur l'unité de commande 2 à proximité de chaque représentation graphique 11A, 11B, 11C correspondante. Ainsi, le pilote peut, sur chaque axe, interagir avec le système de guidage 4 au travers d'un bouton (ou sélecteur) qu'il peut tourner pour notamment incrémenter ou décrémenter une valeur de consigne de guidage. Ce sélecteur peut avoir différentes formes possibles : rotacteur, molette,...

Cette interface (unité de commande 2) permet de commander l'engagement (activation) du mode de guidage, sur la valeur définie (mode dit sélecté), ou sur une valeur calculée par le système selon certains critères (mode dit automatique ou managé). Par exemple, dans un mode de réalisation particulier, une action à tirer sur un bouton 8A, 8B, 8C1, 8C2 (figure 3) peut permettre un armement/engagement du mode sélecté associé, alors qu'une action à pousser sur ce même bouton 8A, 8B, 8C1, 8C2 peut correspondre à une requête d'armement/engagement du mode managé associé. Pour l'axe de vitesse/Mach, une action à tirer sur le sélecteur 8A engage le mode sélecté SPD (ou MACH selon la référence) et une action à pousser sur le sélecteur 8A engage le mode AUTO SPD (consigne de vitesse calculée de façon automatique par le système 4).

Dans un second mode de réalisation (en variante ou en complément dudit premier mode de réalisation), ledit dispositif de dialogue 1 comporte des moyens pour réaliser une action directe sur un objet graphique représentant une portion 13 d'un ensemble graphique 12A, 12B, 12C, en vue au moins d'une sélection de modes de guidage (et éventuellement une sélection de consignes de guidage).

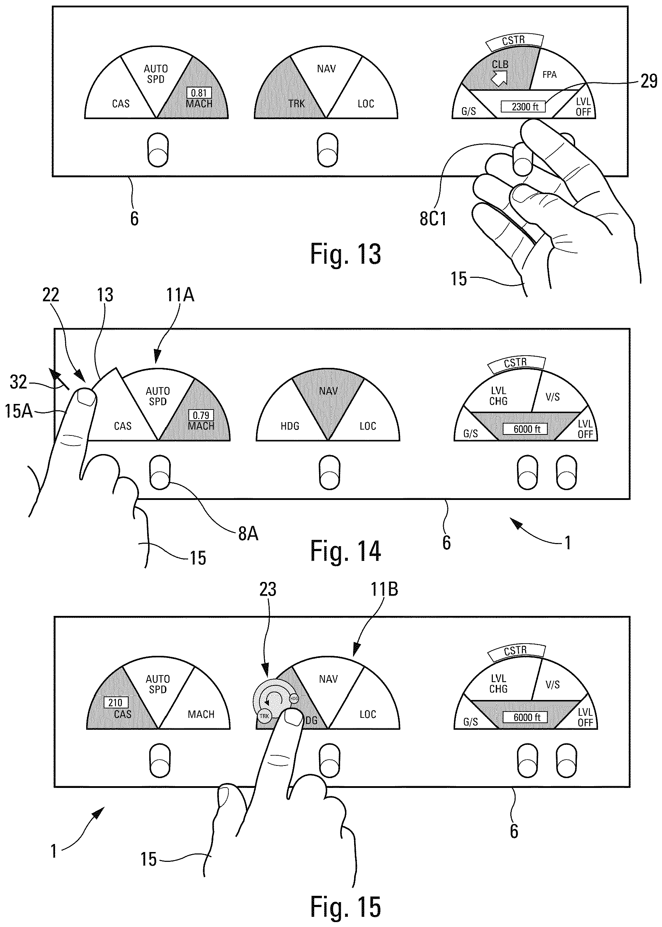

Dans une première variante de ce second mode de réalisation, ledit écran 6 est un écran tactile, et une sélection de modes de guidage (et éventuellement de consignes de guidage) est susceptible d'être réalisée par un contact direct dudit écran tactile 6, de préférence (mais non exclusivement) par un contact digital de l'opérateur, comme représenté par exemple sur les figures 14 et 15.

En outre, dans une seconde variante (qui peut être prévue en complément), lesdits moyens de sélection 3 comprennent des moyens de commande 9, représentés en traits interrompus sur la figure 1 pour montrer qu'ils correspondent à une variante possible. Ces moyens de commande 9 qui sont reliés à l'unité 2 (par une liaison 10 usuelle de type filaire ou à ondes électromagnétiques) peuvent être actionnés manuellement par un opérateur de manière à commander le déplacement d'un curseur usuel (non représenté) sur l'écran 6, destiné à agir sur des objets graphiques (qui sont réalisés sous forme de moyens d'interaction) desdits ensembles graphiques 12A à 12C.

Ces moyens de commande 9 peuvent notamment comporter :
- une boule de commande (« trackball » en anglais) ;
- une souris d'ordinateur ; et/ou
- un pavé tactile (« trackpad » ou «touchpad » en anglais).

Dans ce second mode de réalisation, l'engagement/armement d'un mode peut se faire par interaction directe sur un objet graphique (de manière tactile ou à l'aide d'un pointeur).

Par exemple, une interaction directe sur une portion 13 peut permettre d'armer/engager le mode sur lequel on interagit. Cette interaction peut être un appui/clic ou une translation (figure 14) ou toute autre action interprétable par le système.

Dans ce mode de réalisation, on prévoit de préférence une animation graphique lors de l'interaction directe avec les objets graphiques de l'écran 6. Par exemple, on peut prévoir une interaction en translation (via le pointeur ou un doigt 15A) sur la portion de façon à saisir l'objet graphique et le tirer vers l'extérieur, déclenchant ainsi l'armement/engagement du mode de guidage associé. Lors de cette translation, telle que représentée par une flèche 32 sur la figure 15, la portion 13 (en l'occurrence CAS) peut s'étirer de façon homothétique en dynamique en suivant la translation du pointeur ou du doigt, comme illustré par une référence 22. Ainsi, l'animation visuelle va accompagner la compréhension de la validité de l'interaction.

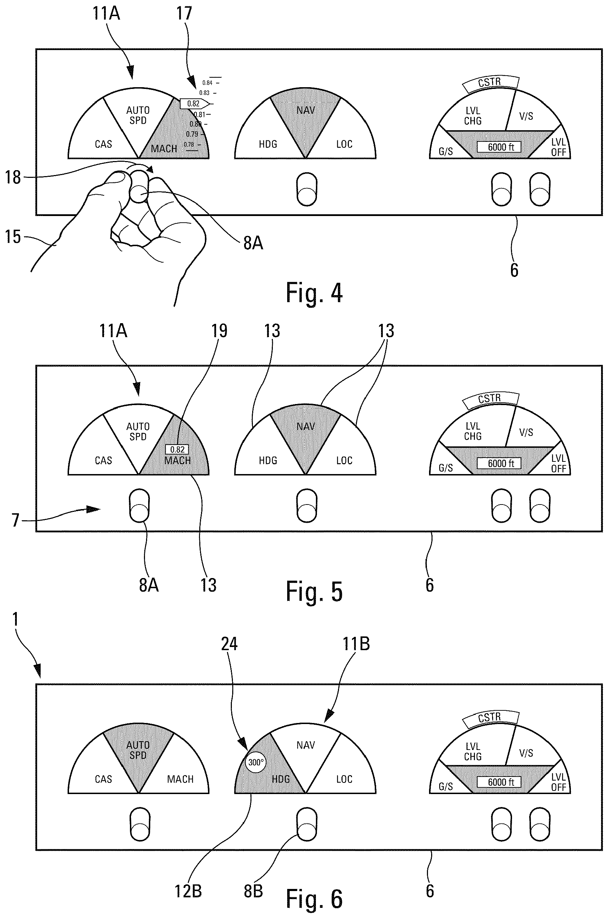

Les figures 2 à 5 illustrent différentes situations successives lors de la modification d'une consigne de guidage du système de guidage 4, relative à l'axe de vitesse, en l'occurrence une consigne de Mach. Plus précisément :
- la figure 2 illustre la situation initiale avant une modification de la consigne de Mach, la vitesse de l'aéronef étant gérée automatiquement (la portion AUTO SPD est alors colorée, comme illustré par une surface grisée sur la figure 2) ;
- sur la figure 3, un opérateur, dont on a représenté partiellement la main 15, tire avec deux doigts sur le bouton 8A de manière à accéder à la fonction de sélection de la consigne de MACH, dont la portion 13 correspondante devient colorée dans la réalité (et grisée sur la figure), cette action faisant de plus apparaître (de façon temporaire) une échelle de Mach 17 permettant d'aider au réglage de la nouvelle consigne ;
- l'opérateur tourne ensuite le bouton 8A avec sa main, tel qu'illustré par une flèche 18 sur la figure 4, de manière à modifier la valeur de la consigne de Mach, comme reproduit sur l'échelle 17 ;
- sur la figure 5, l'opérateur a relâché le bouton 8A et la nouvelle valeur sélectée (0,82) est affichée dans une étiquette 19 visualisée dans la portion 13 correspondant au MACH. De préférence, cette étiquette 19 est par exemple en bleu pour la valeur sélectée, et elle change de couleur et devient par exemple verte, lorsque la consigne sélectée est atteinte.

Dans le cadre de la présente invention, ledit dispositif de dialogue 1 peut comporter ;
- une seule unité de commande 2 ; ou
- une pluralité d'unités de commande 2 telles que celle précitée ; ou bien
- une telle unité de commande 2 conjointement avec un boîtier de commande différent (redondant et dissimilaire), par exemple de type FCU ou FCU backup (sorte de recopie logicielle), ou encore avec une interaction directe sur les écrans de restitution des informations de guidage (PFD/ND/VD), ce qui permet au pilote de disposer de moyens de commande différents et en partie complémentaires.

La présente invention concerne également un système de guidage 4 d'un aéronef, à savoir un directeur de vol 4A ou un système de pilotage automatique 4B, qui comporte un dispositif de dialogue 1 tel que celui précité, pour permettre un dialogue entre ledit système de guidage 4 et un pilote dudit aéronef.

Par ailleurs, comme indiqué ci-dessus, on réalise, sur chacune desdites représentations graphiques 11A, 11B, 11C, sous forme d'un graphisme ou d'une animation graphique, une mise en évidence graphique particulière des modes de guidage armés. Par exemple, le ou les modes armés peuvent être représentés par un contour épais de la même couleur que le mode engagé.

En outre, on réalise, de plus, une représentation graphique particulière des modes de capture (lorsque le mode de maintien est sur le point d'être engagé, l'écran 6 représente la capture par un graphisme et/ou une animation graphique). Par exemple, le ou les modes de capture peuvent être représentés par un contour épais pulsant (animation graphique faisant penser à un contour qui respire) de la même couleur que le mode engagé, comme représenté pour le contour 20 de la portion NAV sur la figure 10.

Par ailleurs, on affiche, sur au moins l'une desdites représentations graphiques 11A, 11B, 11C, la valeur d'une consigne de guidage dans la portion associée au mode de guidage correspondant. Par exemple, on peut afficher de façon permanente (dans une étiquette) la valeur de consigne associée au mode engagé, comme la valeur d'altitude (6000 ft (pieds)) dans l'étiquette 21 de la figure 3. Dans ce cas, de préférence, l'affichage de ladite valeur est différencié selon que cette valeur de consigne de guidage est atteinte ou en cours d'acquisition. Par exemple, une valeur sélectée peut être affichée en bleu tant qu'elle n'est pas atteinte, et en vert une fois qu'elle est atteinte.

En outre, lors de la modification de la valeur d'une consigne de guidage à l'aide desdits moyens de sélection 3, une échelle relative à cette consigne de guidage est affichée, de façon temporaire, sur la représentation graphique correspondante, comme représenté par exemple sur les figures 3 et 4 pour l'échelle 17.

Cet affichage (temporaire pendant la durée de la modification) d'une échelle a pour but de :
- visualiser, de façon graphique, la sélection de la nouvelle valeur de consigne : visualiser l'incrémentation ou la décrémentation ; et
- souligner, de façon graphique, l'état de la consigne en cours de modification, par le fait que les échelles sont, de préférence, différentes et adaptées à chaque valeur de consigne.

Par ailleurs, dans le cas où le système de guidage 4 comprend au moins un mode de guidage qui devient prioritaire lorsque des conditions particulières sont remplies, la portion relative audit mode de guidage prioritaire est mise en évidence, de façon automatique, sur la représentation graphique correspondante lorsque lesdites conditions particulières sont remplies. De plus, dans ce cas, on change l'organisation graphique de l'interface nominale. Par exemple, dans la représentation en demi-camembert, le mode TCAS (suivant les ordres de guidage du système d'anticollision air) peut apparaître en semi-recouvrement des autres modes pour indiquer qu'il est prioritaire. Ce mode de réalisation particulier peut également s'appliquer à d'autres modes considérés comme prioritaires, comme par exemple le mode de décollage ou de remise des gaz ou des modes dits « derniers filets de sécurité ».

Par ailleurs, dans un mode de réalisation particulier, ledit dispositif de dialogue 1 comprend, sur ledit écran de visualisation 6, une interaction graphique entre des portions 13 de deux représentations graphiques 11A, 11B, 11C différentes, lorsque les modes de guidage correspondant auxdites portions 13 sont liés ensemble. Par exemple, suite à une interaction spécifique de requête d'armement/engagement du mode commun latéral/vertical d'approche, un graphisme particulier (et/ou une animation) peut relier le mode LOC de la représentation graphique 11B au mode G/S de la représentation graphique 11C.

En outre, dans un mode de réalisation particulier, ledit dispositif de dialogue 1 comprend, sur ledit écran de visualisation 6, au moins un moyen d'interaction permettant de réaliser un changement de référence de guidage (vitesse ou mach, cap HDG ou route TRK, vitesse verticale V/S ou pente FPA, mètres ou pieds,...) pour une même consigne de guidage, et un changement de référence de guidage, lorsqu'il est réalisé, est mis en évidence sur la portion correspondante. Par exemple, dans le mode de représentation en éventail, on peut imaginer qu'un pointeur (ou un doigt) effectue un mouvement de rotation sur la portion correspondante, déclenchant ainsi le changement de référence de ce mode (par exemple, pour passer de HDG à TRK, comme représenté sur la figure 15). Lors de cette rotation, le pointeur (ou doigt) suit un arc de cercle (avec un objet graphique 23 qui apparaît au début du mouvement du pointeur) dirigé vers la référence souhaitée. Ainsi, l'animation visuelle va accompagner la compréhension de la validité de l'interaction.

On peut également envisager un menu contextuel qui apparaît par interaction spécifique sur le mode (par exemple : clic ou appui long, ou tout autre moyen) permettant de sélectionner une autre référence.

Par ailleurs, à titre d'illustration, les figures 6 à 10 représentent différentes situations successives lors de la modification d'une consigne de guidage du système de guidage 4, relative à l'axe latéral, en l'occurrence une consigne de cap HDG. Plus précisément :
- la figure 6 illustre la situation initiale avant une modification, l'aéronef suit un cap de 300°, valeur qui est affichée dans une étiquette 24 par exemple un rond en bleu ;

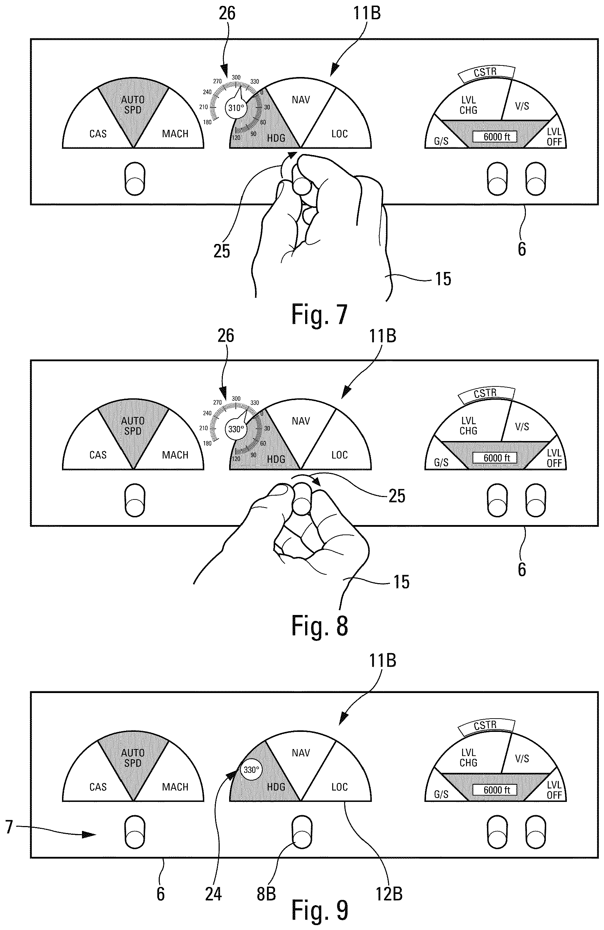

- sur les figures 7 et 8, un opérateur tourne le bouton 8B avec les doigts de sa main 15, comme illustré par une flèche 25, de manière à modifier la valeur de la consigne de cap, en liaison avec une échelle de cap 26 (qui est affichée de façon temporaire le temps de la modification) ;
- sur la figure 9, l'opérateur a relâché le bouton et la nouvelle consigne sélectée (330°) est affichée dans l'étiquette 24 qui est visualisée dans la portion 13 correspondant au cap HDG. De préférence, cette étiquette 24 est par exemple en bleu pour la valeur sélectée, et elle change de couleur et devient par exemple vert lorsque la consigne sélectée est atteinte (figure 10).

L'opérateur peut ensuite appuyer sur le bouton 8B pour armer le mode NAV de suivi du plan de vol. Pour mettre en évidence un tel armement, la portion correspondante est rendue visible par exemple par un contour épais de la même couleur que le remplissage de la portion en état engagé, pour illustrer la prise en compte de la demande d'engagement. Ce contour épais 20 est illustré sur la portion 13 NAV de la figure 10 (mais il peut également s'agir de tout autre rendu perceptible pertinent). Dans la même optique, un mode de capture/ou de rejointe peut en particulier être rendu perceptible par un contour coloré pulsant ou respirant, évoquant l'idée que la forme va se remplir complètement lors du mode de maintien.

Les figures 11 à 13 illustrent, quant à elles, différentes situations successives lors de la modification d'une consigne de guidage du système de guidage 4, relative à l'axe vertical, en l'occurrence une consigne d'altitude. Plus précisément :
- la figure 11 illustre la situation initiale avant une modification. L'aéronef suit une altitude de 2000 pieds (ft), valeur qui est affichée dans une étiquette 29 par exemple en vert ;
- sur la figure 12, un opérateur tourne le bouton 8C1 avec les doigts de sa main 15, comme illustré par une flèche 30, de manière à modifier la valeur de la consigne d'altitude, en liaison avec une échelle d'altitude 31 (qui est affichée de façon temporaire le temps de la modification) ;
- une fois que l'opérateur a relâché le bouton 8C1 et que la nouvelle consigne a été sélectée, l'opérateur peut ensuite tirer sur le bouton 8C1 pour engager le mode de montée CLB vers cette nouvelle altitude, comme illustré sur la figure 13. La nouvelle valeur de l'altitude de consigne (2300 ft) est affichée dans l'étiquette 29 qui est visualisée dans la portion 13 correspondant à l'altitude. De préférence, cette étiquette 29 est en bleu pour la valeur sélectée ; et
- l'étiquette 29 change de couleur et devient par exemple verte lorsque l'altitude de consigne est atteinte.

Le dispositif de dialogue 1 conforme à l'invention, de type interactif, permet donc de fournir une restitution synthétique de l'état du guidage (modes armés ou engagés et consignes de guidage), à l'endroit même (unité de commande 2) où le pilote peut sélectionner les consignes de guidage ainsi que les modes de guidage, ce qui permet notamment d'éviter des allers-retours visuels usuels. On dispose ainsi d'une vision d'ensemble très pertinente de l'état du système de guidage 4, représentant :
- l'ensemble des modes de guidage possibles ;
- les modes qui sont engageables ;
- les modes engagés, avec une distinction entre un mode de capture et un mode de maintien ;
- la compréhension implicite qu'un seul mode de guidage à la fois peut être engagé sur un axe ;
- les modes armés ;
- les consignes de guidage en cours de rejointe ;
- les consignes de guidage maintenues ;
- les consignes de guidage en cours de modification ; et
- les valeurs de consignes accessibles à la modification.

## Revendications

1. Dispositif de dialogue entre un opérateur d'un aéronef et un système de guidage (4) susceptible de gérer des modes de guidage de l'aéronef, ledit système de guidage (4) utilisant des consignes de guidage pour la gestion desdits modes de guidage, ledit dispositif de dialogue (1) comprenant au moins une unité de commande (2) qui comporte des moyens (3) de sélection manuelle de modes de guidage et de consignes de guidage, et un écran de visualisation (6), sur lequel sont affichées trois représentations graphiques (11A, 11B, 11C),
lesdites trois représentations graphiques (11A, 11B, 11C) sont associées respectivement aux trois axes de commande de l'aéronef : l'axe de vitesse, l'axe latéral et l'axe vertical, selon lesquels le système de guidage (4) est susceptible de gérer des modes de guidage, chacune desdites représentations graphiques (11A, 11B, 11C) est réalisée sous forme d'un ensemble graphique (12A, 12B, 12C), chacun desdits ensembles graphiques (12A, 12B, 12C) comportant une pluralité de portions (13), dont chacune est associée à un mode de guidage de l'axe de commande associé, de sorte que tous les modes de guidage possibles du système de guidage (4) sont ainsi représentés, et la portion (13) relative à un mode de guidage effectivement engagé sur le système de guidage (4) est mise en évidence sur la représentation graphique correspondante, cette représentation mettant en évidence le fait que les modes de guidage sont actifs de façon exclusive sur un axe de guidage donné,
et lors de la modification de la valeur d'une consigne de guidage à l'aide desdits moyens de sélection (3), une échelle (26, 31) relative à cette consigne de guidage est affichée, de façon temporaire, sur la représentation graphique correspondante.

2. Dispositif de dialogue selon la revendication 1,
**caractérisé en ce que** chacun desdits ensembles graphiques (12A, 12B, 12C) est réalisé sous forme d'un diagramme semi-circulaire, à portions (13) définies par des arcs de cercle adjacents.

3. Dispositif de dialogue selon la revendication 2,
**caractérisé en ce que** l'on réalise, de plus, sur chacune desdites représentations graphiques (11A, 11B, 11C), au moins l'une des mises en évidence graphiques suivantes :
- une mise en évidence graphique particulière de modes de guidage armés ; et
- une mise en évidence graphique particulière de modes de capture.

4. Dispositif de dialogue selon l'une des revendications 1 à 3,
**caractérisé en ce que** l'on affiche, sur au moins l'une desdites représentations graphiques (11A, 11B, 11C), la valeur d'une consigne de guidage dans la portion associée au mode de guidage correspondant.

5. Dispositif de dialogue selon la revendication 4,
**caractérisé en ce que** l'affichage de ladite valeur est différencié selon que cette valeur de consigne de guidage est atteinte ou en cours d'acquisition.

6. Dispositif de dialogue selon l'une quelconque des revendications précédentes, pour un système de guidage (4) comprenant au moins un mode de guidage qui devient prioritaire lorsque des conditions particulières sont remplies,
**caractérisé en ce que** la portion relative audit mode de guidage prioritaire est mise en évidence de façon automatique sur la représentation graphique correspondante lorsque lesdites conditions particulières sont remplies.

7. Dispositif de dialogue selon l'une quelconque des revendications précédentes,
**caractérisé en ce qu'**il comprend, sur ledit écran de visualisation (6), une interaction graphique entre des portions de deux représentations graphiques différentes lorsque les modes de guidage correspondant auxdites portions sont liés ensemble.

8. Dispositif de dialogue selon l'une quelconque des revendications précédentes,
**caractérisé en ce qu'**il comporte au moins un moyen d'interaction (23) permettant de réaliser un changement de référence de guidage pour une même consigne de guidage, et **en ce qu'**un changement de référence de guidage, lorsqu'il est réalisé, est mis en évidence sur la portion correspondante.

9. Dispositif de dialogue selon l'une quelconque des revendications précédentes,
**caractérisé en ce que** lesdits moyens de sélection (3) comprennent au moins un moyen d'actionnement manuel (8A, 8B, 8C1, 8C2) qui est agencé sur l'unité de commande (2) à proximité de la représentation graphique correspondante.

10. Dispositif de dialogue selon l'une quelconque des revendications précédentes,
**caractérisé en ce qu'**il comporte des moyens pour réaliser une action directe sur un objet graphique représentant une portion d'un ensemble graphique, en vue au moins d'une sélection de mode de guidage.

11. Dispositif de dialogue selon la revendication 10,
**caractérisé en ce que** l'on présente sur l'écran de visualisation (6), au moins sur la portion correspondante, une animation graphique (22) lors de l'interaction directe.

12. Dispositif de dialogue selon l'une quelconque des revendications précédentes,
**caractérisé en ce que** ledit écran (6) est un écran tactile, et **en ce qu'**une sélection au moins de modes de guidage est susceptible d'être réalisée par un contact direct dudit écran tactile.

13. Dispositif de dialogue selon l'une quelconque des revendications précédentes,
**caractérisé en ce que** lesdits moyens de sélection (3) comprennent des moyens de commande (9) reliés à l'écran (6) et permettant à un opérateur de commander le déplacement d'un curseur sur l'écran (6), destiné à la sélection au moins de modes de guidage.

14. Système de guidage d'un aéronef,
**caractérisé en ce qu'**il comporte un dispositif de dialogue (1) tel que celui spécifié sous l'une quelconque des revendications 1 à 13, pour permettre un dialogue entre ledit système de guidage (4) et un opérateur dudit aéronef, au moins en vue de la sélection de modes de guidage et de consignes de guidage.

## Patentansprüche

1. Dialogvorrichtung zwischen einem Luftfahrzeugbetreiber und einem Lenksystem (4), das Lenkmodi des Luftfahrzeugs verwalten kann, wobei das Lenksystem (4) Lenkanweisungen für die Verwaltung der Lenkmodi verwendet, wobei die Dialogvorrichtung (1) mindestens eine Steuereinheit (2), die Mittel (3) zur manuellen Auswahl von Lenkmodi und von Lenkanweisungen beinhaltet, und einen Visualisierungsbildschirm (6), auf dem drei grafische Darstellungen (11A, 11B, 11C) angezeigt werden, umfasst, wobei die drei grafischen Darstellungen (11A, 11B, 11C) jeweils mit den drei Steuerachsen des Luftfahrzeugs assoziiert sind: der Geschwindigkeitsachse, der Querachse und der Vertikalachse, gemäß denen das Lenksystem (4) Lenkmodi verwalten kann, wobei jede der grafischen Darstellungen (11A, 11B, 11C) in Form einer grafischen Anordnung (12A, 12B, 12C) realisiert ist, wobei jede der grafischen Anordnungen (12A, 12B, 12C) eine Vielzahl von Abschnitten (13) beinhaltet, die jeweils mit einem Lenkmodus der assoziierten Steuerachse assoziiert ist, sodass alle möglichen Lenkmodi des Lenksystems (4) folglich dargestellt sind, und der Abschnitt (13) in Bezug auf einen tatsächlich auf das Lenksystem (4) wirkenden Lenkmodus auf der entsprechenden grafischen Darstellung hervorgehoben wird, wobei diese Darstellung die Tatsache hervorhebt, dass die Lenkmodi auf ausschließliche Weise auf einer gegebenen Lenkachse wirksam sind,
und bei der Änderung des Werts einer Lenkanweisung mittels der Auswahlmittel (3) eine Skala (26, 31) in Bezug auf diese Lenkanweisung auf vorübergehende Weise auf der entsprechenden grafischen Darstellung angezeigt wird.

2. Dialogvorrichtung nach Anspruch 1,
**dadurch gekennzeichnet, dass** jede der grafischen Anordnungen (12A, 12B, 12C) in Form eines halbkreisförmigen Diagramms mit Abschnitten (13), die durch benachbarte Kreisbögen definiert sind, realisiert ist.

3. Dialogvorrichtung nach Anspruch 2,
**dadurch gekennzeichnet, dass** weiter auf jeder der grafischen Darstellungen (11A, 11B, 11C) mindestens die eine der folgenden grafischen Hervorhebungen realisiert wird:
- eine besondere grafische Hervorhebung lückenloser Lenkmodi; und
- eine besondere grafische Hervorhebung von Erfassungsmodi.

4. Dialogvorrichtung nach einem der Ansprüche 1 bis 3,
**dadurch gekennzeichnet, dass** auf der mindestens einen der grafischen Darstellungen (11A, 11B, 11C) der Wert einer Lenkanweisung im Abschnitt angezeigt wird, der mit dem entsprechenden Lenkmodus assoziiert ist.

5. Dialogvorrichtung nach Anspruch 4,
**dadurch gekennzeichnet, dass** sich die Anzeige des Werts in Abhängigkeit davon, ob dieser Lenkanweisungswert erreicht ist oder dabei ist, erreicht zu werden, unterschiedet.

6. Dialogvorrichtung nach einem der vorstehenden Ansprüche für ein Lenksystem (4), das mindestens einen Lenkmodus umfasst, der bei Erfüllen besonderer Bedingungen vorrangig wird,
**dadurch gekennzeichnet, dass** der Abschnitt in Bezug auf den vorrangigen Lenkmodus bei Erfüllen der besonderen Bedingungen auf automatische Weise auf der entsprechenden grafischen Darstellung hervorgehoben wird.

7. Dialogvorrichtung nach einem der vorstehenden Ansprüche,
**dadurch gekennzeichnet, dass** sie auf dem Visualisierungsbildschirm (6) eine grafische Interaktion zwischen Abschnitten zweier unterschiedlicher grafischer Darstellungen umfasst, wenn die Lenkmodi, die den Abschnitten entsprechen, miteinander verknüpft sind.

8. Dialogvorrichtung nach einem der vorstehenden Ansprüche,
**dadurch gekennzeichnet, dass** sie mindestens ein Interaktionsmittel (23) beinhaltet, das es ermöglicht, eine Lenkreferenzänderung für eine gleiche Lenkanweisung zu realisieren, und dadurch, dass eine Lenkreferenzänderung, wenn sie realisiert ist, auf dem entsprechenden Abschnitt hervorgehoben wird.

9. Dialogvorrichtung nach einem der vorstehenden Ansprüche,
**dadurch gekennzeichnet, dass** die Auswahlmittel (3) mindestens ein Mittel zur manuellen Betätigung (8A, 8B, 8C1, 8C2) umfassen, das auf der Steuereinheit (2) in der Nähe der entsprechenden grafischen Darstellung angeordnet ist.

10. Dialogvorrichtung nach einem der vorstehenden Ansprüche,
**dadurch gekennzeichnet, dass** sie Mittel beinhaltet, um im Hinblick auf mindestens eine Lenkmodusauswahl eine unmittelbare Wirkung auf ein grafisches Objekt zu realisieren, das einen Abschnitt einer grafischen Anordnung darstellt.

11. Dialogvorrichtung nach Anspruch 10,
**dadurch gekennzeichnet, dass** bei der unmittelbaren Interaktion auf dem Visualisierungsbildschirm (6) mindestens auf dem entsprechenden Abschnitt eine grafische Animation (22) dargeboten wird.

12. Dialogvorrichtung nach einem der vorstehenden Ansprüche,
**dadurch gekennzeichnet, dass** der Bildschirm (6) ein Berührungsbildschirm ist, und dadurch, dass eine Auswahl mindestens von Lenkmodi durch eine unmittelbare Berührung des Berührungsbildschirms realisiert werden kann.

13. Dialogvorrichtung nach einem der vorstehenden Ansprüche,
**dadurch gekennzeichnet, dass** die Auswahlmittel (3) Steuermittel (9) umfassen, die mit dem Bildschirm (6) verbunden sind und es einem Betreiber ermöglichen, die Bewegung eines Cursors auf dem Bildschirm (6) zu steuern, der für die Auswahl mindestens von Lenkmodi vorgesehen ist.

14. Lenksystem eines Luftfahrzeugs,
**dadurch gekennzeichnet, dass** es eine Dialogvorrichtung (1) nach einem der Ansprüche 1 bis 13 beinhaltet, um einen Dialog zwischen dem Lenksystem (4) und einem Luftfahrzeugbetreiber mindestens im Hinblick auf die Auswahl von Lenkmodi und von Lenkanweisungen zu ermöglichen.

## Claims

1. Dialog device between an operator of an aircraft and a guidance system (4) likely to manage guidance modes of the aircraft, said guidance system (4) using guidance setpoints for the management of said guidance modes, said dialog device (1) comprising at least one control unit (2) which comprises means (3) for manually selecting guidance modes and guidance setpoints, and a display screen (6), on which are displayed three graphic representations (11A, 11B, 11C),
said three graphic representations (11A, 11B, 11C) are respectively associated with the three control axes of the aircraft: the speed axis, the lateral axis and the vertical axis, according to which the guidance system (4) is likely to manage guidance modes, each of said graphic representations (11A, 11B, 11C) is produced in the form of a graphic assembly (12A, 12B, 12C), each of said graphic assemblies (12A, 12B, 12C) comprising a plurality of portions (13), each of which is associated with a guidance mode of the associated control axis, so that all the possibly guidance modes of the guidance system (4) are thus represented, and the portion (13) relating to a guidance mode that is actually engaged on the guidance system (4) is highlighted on the corresponding graphic representation, this representation highlighting the fact that the guidance modes are active exclusively on a given guidance axis,
when the value of a guidance setpoint is modified using said selection means (3), a scale (26, 31) relating to this guidance setpoint is displayed, temporarily, on the corresponding graphic representation.

2. Dialog device as claimed in claim 1,
**characterized in that** each of said graphic assemblies (12A, 12B, 12C) is produced in the form of a semicircular diagram, with portions (13) defined by adjacent circular arcs.

3. Dialog device as claimed in claim 2,
**characterized in that**, in addition, on each of said graphic representations (11A, 11B, 11C), at least one of the following graphic highlights is produced:
- a particular graphic highlight of armed guidance modes; and
- a particular graphic highlight of capture modes.

4. Dialog device as claimed in one of claims 1 to 3,
**characterized in that**, on at least one of said graphic representations (11A, 11B, 11C), the value of a guidance setpoint is displayed in the portion associated with the corresponding guidance mode.

5. Dialog device as claimed in claim 4,
**characterized in that** the display of said value is differentiated according to whether this guidance setpoint value is reached or currently being acquired.

6. Dialog device as claimed in any one of the preceding claims, for a guidance system (4) comprising at least one guidance mode which becomes priority when particular conditions are satisfied,
**characterized in that** the portion relating to said priority guidance mode is highlighted automatically on the corresponding graphic representation when said particular conditions are satisfied.

7. Dialog device as claimed in any one of the preceding claims,
**characterized in that** it comprises, on said display screen (6), a graphic interaction between portions of two different graphic representations when the guidance modes corresponding to said portions are linked together.

8. Dialog device as claimed in any one of the preceding claims,
**characterized in that** it comprises at least one interaction means (23) making it possible to make a change of guidance reference for one and the same guidance setpoint, and **in that** a change of guidance reference, when it is made, is highlighted on the corresponding portion.

9. Dialog device as claimed in any one of the preceding claims, **characterized in that** said selection means (3) comprise at least one manual actuation means (8A, 8B, 8C1, 8C2) which is arranged on the control unit (2) in proximity to the corresponding graphic representation.

10. Dialog device as claimed in any one of the preceding claims,
**characterized in that** it comprises means for making a direct action on a graphic object representing a portion of a graphic assembly, for at least a guidance mode selection.

11. Dialog device as claimed in claim 10,
**characterized in that** the display screen (6) presents, at least on the corresponding portion, a graphic animation (22) during the direct interaction.

12. Dialog device as claimed in any one of the preceding claims,
**characterized in that** said screen (6) is a touch screen, and wherein a selection at least of guidance modes is likely to be made by a direct contact on said touch screen.

13. Dialog device as claimed in any one of the preceding claims,
**characterized in that** said selection means (3) comprise control means (9) linked to the screen (6) and enabling an operator to control the movement of a cursor on the screen (6), intended for the selection at least of guidance modes.

14. Guidance system of an aircraft,
**characterized in that** it comprises a dialog device (1) such as that specified in any one of claims 1 to 13, to enable a dialog between said guidance system (4) and an operator of said aircraft, at least for the selection of guidance modes and of guidance setpoints.
